# FASCICULE DE BREVET EUROPEEN

(11) **EP 2 555 956 B1**
(45) Date de publication et mention de la délivrance du brevet: **18.05.2016**
(21) Numéro de dépôt: 11731002.9
(22) Date de dépôt: 07.04.2011
(51) Int. Cl.: B60W 40/02, B60W 40/12, B60W 40/00

(54) **ESTIMATION DE LA TEMPÉRATURE EXTÉRIEURE À UN VÉHICULE À PARTIR DE MESURES DE TEMPÉRATURE SOUS LE CAPOT MOTEUR DU VÉHICULE**
KALKULATION DER TEMPERATUR AUSSERHALB EINES FAHRZEUGES AUSGEHEND VON TEMPERATURMESSUNGEN UNTER DER MOTORHAUBE EINES FAHRZEUGES
ESTIMATION OF THE TEMPERATURE OUTSIDE A VEHICLE FROM TEMPERATURE MEASUREMENTS UNDER THE BONNET OF A VEHICLE

(30) Priorité: 08.04.2010 FR 1052664
(43) Date de publication de la demande: 13.02.2013
(73) Titulaire: Renault s.a.s., 92100 Boulogne-Billancourt (FR)
(72) Inventeur: FOUSSARD, François, 78000 Versailles (FR); GUEGAN, Stéphane, 78000 Versailles (FR); ROMANI, Nicolas, F-75016 Paris (FR); SAINT LOUP, Philippe, F-78760 Jouars Pontchartrain (FR)
(86) Numéro de dépôt international: PCT/FR2011/050791
(87) Numéro de publication internationale: WO 2011/124858

(56) Documents cités:
- US-A- 6 088 661
- US-A1- 2001 010 149
- US-A1- 2004 184 509
- US-A1- 2005 071 074

## Description

L'invention se situe dans le domaine de la surveillance en température des organes mécaniques d'un véhicule propulsé par un moteur à combustion interne. Afin d'estimer la température de ces organes, on calcule en général l'énergie thermique dissipée par frottement dans ces organes, et l'énergie thermique évacuée par contact avec l'air entourant l'organe, c'est-à-dire l'air se trouvant sous le capot moteur ou l'air extérieur au véhicule. Dans le cas de véhicule à quatre roues motrices, on est ainsi amené à calculer la température d'un coupleur, transmettant le couple moteur disponible sur un train de roues vers l'autre train de roues du véhicule. Dans ce cas en particulier, la température extérieure au véhicule est une donnée indispensable pour calculer de manière fiable l'échauffement du coupleur.

Pour des raisons de réduction de coût de fabrication et de coût d'entretien du véhicule, on limite au strict nécessaire le nombre de capteurs de température installés sur le véhicule. On souhaite ainsi avoir des méthodes de surveillance permettant de se passer de capteur sur l'organe (par exemple sur le coupleur) à surveiller, mais permettant également de se passer d'un capteur de température extérieur au véhicule, d'autant plus qu'un tel capteur de température extérieur est nécessairement soumis à des agressions extérieures qui limitent sa précision.

Le document US6,088,661 décrit un procédé et un système selon le préambule de la revendication 1 et 11.

La demande de brevet EP 1 308 336 décrit une méthode de gestion d'un coupleur en fonction de son échauffement, ainsi qu'une méthode de calcul de l'échauffement en fonction, entre autres paramètres, de la température extérieure au véhicule.

La demande de brevet US 2004/0 184 509 propose de calculer la température de l'air extérieur au véhicule à partir de la température d'air mesurée dans un tuyau d'admission d'air vers le moteur. Lors du démarrage, le système initialise la température, soit à la dernière température mémorisée, soit à la température mesurée à l'admission au moment du démarrage, en choisissant la plus faible de ces deux valeurs. Le système surveille ensuite la probabilité que s'établisse un régime stabilisé, en surveillant notamment la durée de roulage du véhicule, la vitesse instantanée du véhicule, et le débit d'air admis dans le moteur. Si la vitesse instantanée est inférieure à un certain seuil, ou que le débit d'air admis est inférieur à un autre seuil, une valeur incrémentale de surchauffe est arbitrairement ajoutée à la valeur de température d'air entrant par rapport à la valeur de température d'air extérieur. La température d'air admis dans le moteur est retenue comme estimation valable de la température d'air extérieur quand la valeur calculée de surchauffe est suffisamment faible. Cette méthode présente l'inconvénient de sous-estimer la température d'air extérieur, donc celle des organes refroidis par cet air extérieur. En outre, elle nécessite l'existence d'un capteur de débit sur le circuit d'admission d'air dans le moteur.

La demande de brevet US 2005/0071074 propose d'estimer la température d'air extérieur à partir d'une température mesurée à l'entrée d'un turbocompresseur, en corrigeant cette température d'entrée du turbocompresseur en fonction des paramètres de fonctionnement, donc du potentiel d'échauffement du compartiment moteur, et en la corrigeant également en fonction de l'activation ou de l'inactivation d'un ventilateur de refroidissement du compartiment moteur. Le document ne spécifie pas comment est déterminée la valeur initiale de température extérieure quand l'estimation de température débute. La méthode proposée nécessite de recourir à des algorithmes ou à des abaques de correction de la température, en fonction du régime du moteur et de l'activité du ventilateur, et nécessite des moyens de calcul suffisamment rapides pour prendre en compte ces algorithmes ou ces abaques. En outre, ces algorithmes et ces abaques seront spécifiques d'un modèle de véhicule donné.

L'invention a pour but de proposer une méthode d'estimation de la température d'air extérieur à un véhicule, permettant de disposer d'une valeur estimée de température dès le démarrage du véhicule. La méthode doit être suffisamment précise pendant le roulage du véhicule, et suffisamment sécurisée au moment du démarrage pour éviter un risque de surchauffe d'un organe suite à un démarrage à chaud du véhicule.

Dans un procédé de détermination d'une valeur estimée de température d'air extérieur à un véhicule mû par un moteur à combustion interne, on attribue une valeur estimée initiale à la température estimée, puis on mesure la température d'air admis dans le moteur et on évalue la vitesse du véhicule. On procède à un filtrage mathématique de la température mesurée d'air admis dans le moteur, le filtrage imposant à la température un gradient maximal prenant au cours du temps au moins deux valeurs positives différentes, l'une ou l'autre de ces valeurs de gradient positif maximal étant sélectionnée en fonction de la vitesse instantanée du véhicule.

Selon un mode de mise en oeuvre préféré, on mesure une température initiale d'air admis dans le moteur et une température initiale de liquide de refroidissement ayant séjourné dans le circuit de refroidissement du moteur, et on déduit de ces deux valeurs une valeur estimée initiale de température.

Avantageusement, on impose un premier seuil de température maximale à la température d'air estimée et à sa valeur initiale.

On peut imposer la valeur du premier seuil de température maximale à la valeur estimée initiale de température, en particulier si l'écart entre la température initiale d'air admis dans le moteur et la température initiale de liquide de refroidissement, est supérieur à un deuxième seuil d'écart.

On peut également imposer le premier seuil de température maximale à la valeur estimée initiale, si la température initiale d'air entrant est supérieure à un troisième seuil, ou si la température initiale de liquide de refroidissement, est supérieure à un quatrième seuil.

Selon un mode de mise en oeuvre préféré, on prend comme valeur estimée initiale la température initiale d'air admis dans le moteur, ou la température initiale de liquide de refroidissement, quand l'écart entre ces deux températures est inférieur au deuxième seuil d'écart.

Avantageusement, la température estimée est égale à la température d'air admis dans le moteur sur les périodes de temps où la température d'air admis dans le moteur est décroissante,

On peut imposer au moins deux gradients positifs maximaux différents à la température estimée quand celle-ci croît, et au moins un gradient négatif minimal quand la température estimée décroît, le gradient négatif étant en valeur absolue supérieur à au moins dix fois chacun des deux gradients positifs.

Selon un mode de mise en oeuvre préféré, le filtrage impose un premier gradient positif maximal compris entre 0.001°C/s et 0.01°C/s, et un second gradient positif maximal qui est un multiple du premier gradient positif par un nombre compris entre 2 à 5.

On peut appliquer le procédé à un coupleur de transfert de couple entre deux trains de roues d'un véhicule, utilisant un procédé d'estimation de la température d'air extérieur au véhicule tel que décrit précédemment.

Selon un autre aspect, un système de détermination d'une valeur estimée de température d'air extérieur à un véhicule mû par un moteur à combustion interne, comprend un capteur de température d'air admis dans le moteur, un capteur de température de liquide de refroidissement du moteur, un dispositif d'évaluation de la vitesse instantanée du véhicule, un module d'initialisation apte à déterminer une température initiale à partir d'une température initiale d'air admis dans le moteur et d'une température initiale de liquide de refroidissement. Le système comprend également un module d'estimation apte à filtrer mathématiquement la température d'air admis dans le moteur, de manière à imposer à la valeur filtrée un gradient maximal prenant au cours du temps au moins deux valeurs positives différentes, l'une ou l'autre de ces valeurs de gradient positif maximal étant sélectionnée en fonction de la vitesse instantanée du véhicule.

D'autres buts, avantages et caractéristiques de l'invention apparaîtront à l'examen de la description détaillée de quelques modes de réalisation donnés à titre d'exemples non limitatifs, et illustrés par les dessins annexés, sur lesquels :
- la figure 1 illustre un véhicule à quatre roues motrices équipé d'un système d'estimation de la température extérieure suivant l'invention ;
- la figure 2 illustre un exemple de courbes de variation de température de liquide de refroidissement, de température d'air admis dans le moteur, et de température estimée de l'air extérieur, enregistrée ou calculées sur le véhicule de la figure 1 ;
- la figure 3 illustre le fonctionnement d'un module d'initialisation, appartenant à un système d'estimation de la température suivant l'invention ;
- la figure 4 illustre le fonctionnement d'un module de calcul courant de la température extérieure au véhicule appartenant à un système d'estimation de la température suivant l'invention.

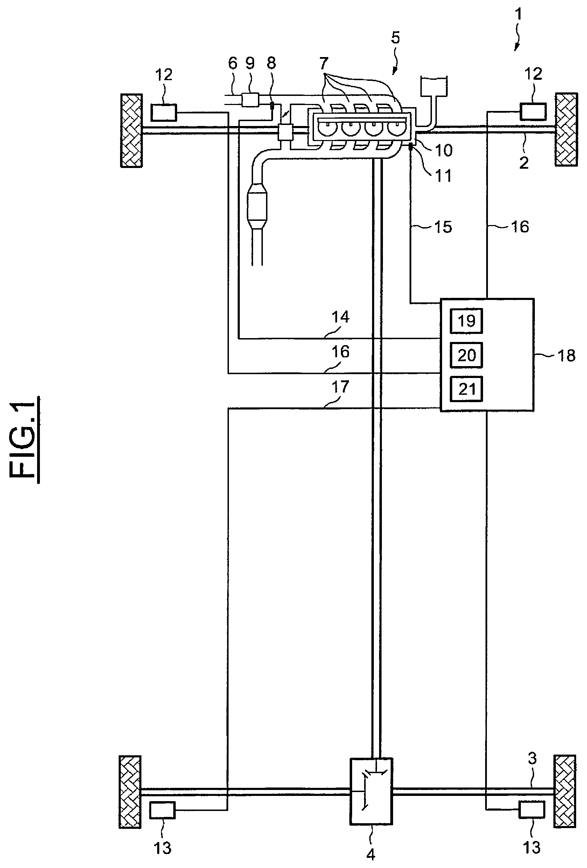

Tel qu'illustré sur la figure 1, un véhicule 1 comprend un train de roues avant 2 et un train de roues arrière 3, le train avant 2 et le train arrière 3 étant reliés par un coupleur 4 apte à solidariser totalement ou partiellement en rotation l'axe du train avant 2, et l'axe du train arrière 3. Chacune des roues du train avant 2 est munie d'un capteur de vitesse de rotation 12 et chacune des roues du train arrière 3 est munie d'un capteur de vitesse de rotation 13. Les valeurs enregistrées par les capteurs 12 et 13 permettent notamment de calculer la différence de vitesse de rotation entre l'axe du train avant 2 et l'axe du train arrière 3, ainsi que la vitesse instantanée du véhicule 1. De tels capteurs sont généralement présents sur les quatre roues d'un véhicule à quatre roues motrices, ou plus généralement sur les quatre roues de véhicules équipés d'un système d'antipatinage de type ABS, ou d'un système de correction de trajectoire de type ESP. L'axe du train avant 2 est relié par un système de transmission (non représenté) à un moteur à combustion interne 5, comprenant notamment une entrée d'air 6, amenant de l'air frais au travers d'un filtre à air 9 vers des cylindres 7 du moteur. Le moteur 5 est équipé d'un circuit de liquide de refroidissement 10. Un capteur de température 8 est disposé au niveau du circuit d'entrée d'air 6, entre le filtre à air 9 et l'entrée des cylindres 7. Un capteur de température 11 est disposé au voisinage du moteur 5 en contact avec le liquide du circuit de refroidissement 10. Les capteurs de vitesse de roues 12 et 13, et les capteurs de température 8 et 11, sont reliés par des connexions respectivement 16, 17, 14, 15 à une unité de commande électronique 18. L'unité de commande électronique 18 comprend notamment un module 21 d'estimation de la vitesse instantanée du véhicule, le module 21 étant relié au connections 16 et 17 des capteurs de vitesse de roues. L'unité de commande électronique 18 comprend également un module d'initialisation 19 relié par les connexions 14 et 15 aux deux capteurs de température 8 et 11, et un module 20 d'estimation courante de la température courante extérieure, le module 20 étant relié par une connexion 16 au capteur de température 8 d'air admis dans le moteur. Le module d'estimation courante de la température 20 est en outre relié aux deux autres modules 19 d'initialisation et 21 d'estimation de la vitesse du véhicule. Lorsque, après un arrêt du véhicule, le moteur 5 est démarré, le module 19 d'initialisation est activé. Il enregistre alors une valeur de température initiale d'air admis dans le moteur, qui lui est transmise par le capteur 8, et une température initiale de liquide de refroidissement, qui lui est transmise par le capteur 11. A partir de ces deux valeurs, le module d'initialisation 19 calcule une valeur initiale de température d'air extérieur au véhicule qu'il transmet au module d'estimation courante de température 20.

Une fois que le véhicule est en mouvement, le module d'estimation 20 reçoit de manière périodique une valeur estimée de vitesse instantanée du véhicule du module 21, et une valeur mesurée de température d'air admis dans le moteur provenant du capteur 8. Le module d'estimation 20 effectue un filtrage mathématique de la valeur lui arrivant du capteur 8, les modalités de filtrage étant adaptées en fonction de la valeur courante de vitesse instantanée du véhicule, et dépendant de la valeur initiale de température que lui a transmise le module d'initialisation 19. La valeur ainsi filtrée peut être considérée comme une estimation de la température d'air extérieur au véhicule, et peut servir, par exemple, pour effectuer un affichage d'informations à l'intention du conducteur, ou pour estimer des températures de différents organes mécaniques dissipatifs, par exemple une ou plusieurs températures internes à un coupleur de transfert de couple 4 entre un train avant 2 et un train arrière 3 du véhicule.

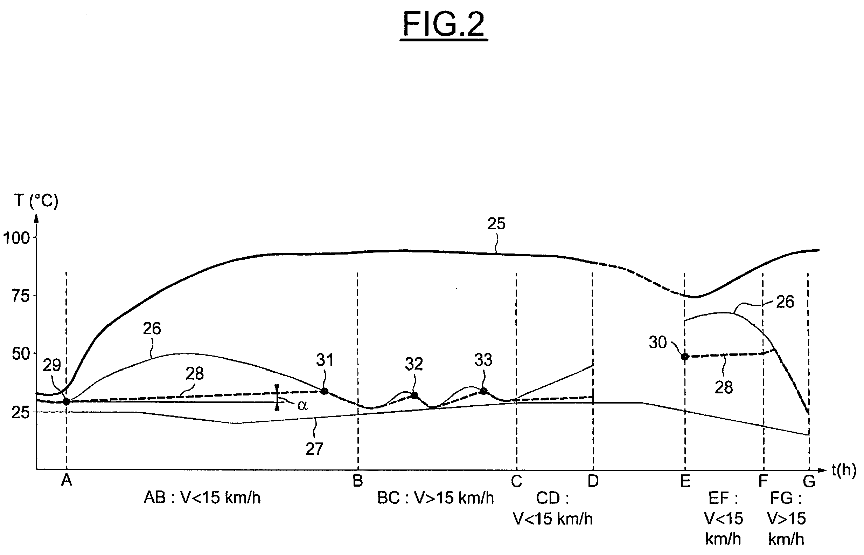

La figure 2 montre, sur un intervalle de temps AG incluant des phases de roulage du véhicule 1 de la figure 1, un exemple de courbe de température extérieure réelle 27, et des courbes de température mesurées ou estimées 25, 26 et 28. L'intervalle de temps AG comprend les séquences de roulage suivantes :
En A, le véhicule 1 démarre après un arrêt prolongé et roule jusqu'à l'instant B à une vitesse inférieure à 15 km/heure. Sur l'intervalle BC, la vitesse du véhicule garde constamment des valeurs supérieures à 15 km/heure. Sur l'intervalle de temps CD, le véhicule ralentit et sa vitesse V redevient inférieure à 15 km/heure. A l'instant D, le véhicule s'arrête, le moteur est éteint et le véhicule reste à l'arrêt jusqu'à l'instant E. A l'instant E le véhicule redémarre et circule à une vitesse inférieure à 15 km/heure jusqu'à l'instant F. Entre l'instant F et l'instant G, le véhicule reprend une vitesse de croisière supérieure à 15 km/heure.

La courbe 27, indiquant la température extérieure au véhicule, est donnée à titre purement théorique, puisque l'on y a pas accès directement. Elle est cependant représentée car elle influe sur les évolutions des autres températures mesurées. Les courbes 25 et 26 représentent respectivement la température de liquide de refroidissement délivrée par le capteur 11 de la figure 1, et la température d'air admis dans le moteur, délivrée par le capteur 8 de la figure 1. Au démarrage A du véhicule, les courbes 25, 26 et 27 sont proches les unes des autres, car le liquide de refroidissement, les conduites dans lesquelles circule l'air admis dans le moteur, et l'ensemble du compartiment moteur, sont sensiblement parvenus à un équilibre thermique avec l'air extérieur au véhicule.

Après le démarrage du véhicule à l'instant A, la température indiquée par la courbe 25 du liquide de refroidissement, augmente jusqu'à une température qui peut avoisiner les 90°, et reste proche de ces valeurs jusqu'à l'arrêt à l'instant D du véhicule. L'intervalle de temps DE pendant lequel le véhicule est arrêté, ne permet pas un refroidissement complet de ce liquide de refroidissement, si bien qu'au moment du redémarrage E du véhicule, la température du liquide de refroidissement est encore relativement élevée, par exemple ici supérieure à 75°.

Après le démarrage du véhicule à l'instant A, la température de l'air admis dans le moteur, donnée par la courbe 26, augmente dans un premier temps jusqu'à environ 50°, car les conduites dans lesquelles circule l'air admis s'échauffent en même temps que l'ensemble du compartiment moteur. Lors du roulage subséquent du véhicule, et avec l'augmentation de vitesse du véhicule sur l'intervalle de temps BC, le flux d'air circulant sous le capot moteur permet de limiter l'échauffement des pièces sous capot moteur, ce qui réduit la différence de température entre la température de la courbe 26 indiquant la température d'air admis dans le moteur, et la température 27 d'air extérieur au véhicule. L'écart entre la température d'air extérieur au véhicule et la température d'air admis continue cependant d'osciller, à cause, par exemple, des variations de température sous le capot moteur causées par des changements de régime du moteur.

Lors du second démarrage du véhicule à l'instant E, le compartiment moteur se trouve encore à une température sensiblement plus élevée que la température d'air extérieur au véhicule, si bien que la température 26 d'air admis dans le moteur est dans un premier temps relativement élevée (supérieure à 50°C), avant de décroître vers des valeurs proches de 30°, une fois qu'une circulation d'air suffisante s'établit sous le capot moteur quand le véhicule a atteint une vitesse de croisière supérieure à 15km/h.

La courbe 28 représente la température estimée d'air extérieur au véhicule, obtenue par filtrage mathématique de la courbe 26 au moyen du module d'estimation 20. Au moment du démarrage A du véhicule, une valeur 29 initiale de température est délivrée au module d'estimation 20 par le module d'initialisation 19 de la figure 1. La valeur initiale 29 est ici égale à la température mesurée pour l'air admis dans le moteur au moment du démarrage, car le module d'initialisation, en comparant les température de liquide de refroidissement et d'air admis dans le moteur, conclut que les véhicule a eu le temps de refroidir jusqu'à la température ambiante.

Après le démarrage du véhicule, tant que la température de la courbe enregistrée 26 reste supérieure à la dernière température calculée pour la courbe 28, le module d'estimation 20 incrémente, à chaque instant de calcul, la température estimée 28, de manière à ce que cette courbe 26 ait une pente maximale α. Une fois que la courbe 28 a rejoint la courbe 26, par exemple aux points 31, 32 ou 33, la courbe 28 suit ensuite la courbe 26 tant que le gradient de la courbe 26 reste inférieur au gradient maximal imposé α. Les deux courbes restent donc ensuite confondues tant que la courbe 26 décroît, ou que la courbe 26 croît moins vite que le gradient maximal imposé.

Le gradient maximal imposé à la courbe 28 varie en fonction de la vitesse V instantanée du véhicule. Sur l'exemple illustré à la figure 2, ce gradient prend deux valeurs distinctes, la première valeur de gradient correspondant aux vitesses V inférieures à 15 km/heure, c'est-à-dire aux intervalles de temps AB, CD et EF ; et la seconde valeur de gradient correspondant aux vitesses instantanées supérieures à 15 km/heure, c'est-à-dire sur la figure 2 aux intervalles de temps BC et FG.

Lorsque le véhicule redémarre à l'instant E, le module d'initialisation 19 délivre une nouvelle valeur initiale 30 de température d'air extérieur au véhicule. Le module 20 d'estimation courante utilise la valeur initiale 30 pour recommencer à filtrer les valeurs de la courbe 26 suivant le processus expliqué précédemment. Dans le cas illustré à la figure 2, lors de ce second démarrage « à chaud » du véhicule, la température 25 de liquide de refroidissement et la température 26 d'air admis dans le moteur sont relativement élevées. Le module d'initialisation 19 attribue alors une valeur arbitraire maximale à la température initiale 30.

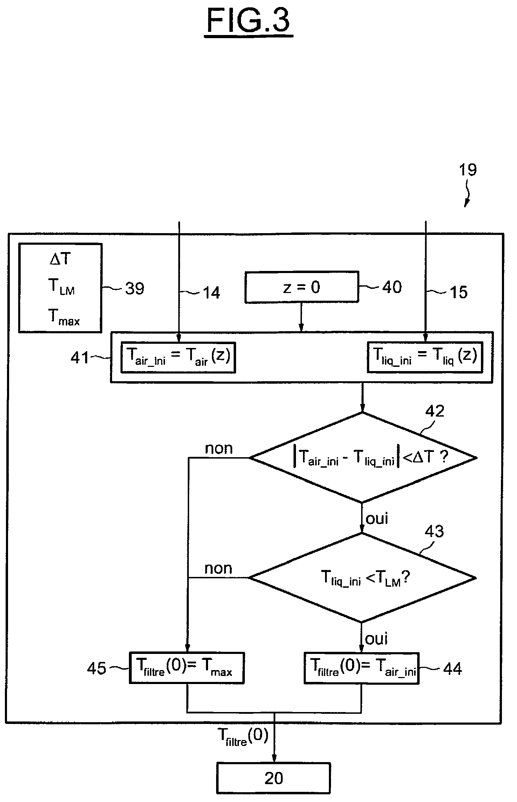

La figure 3 illustre de manière simplifiée un mode de fonctionnement possible du module d'initialisation 19 de l'unité de commande électronique 18 de la figure 1. On retrouve sur la figure 3 quelques éléments communs à la figure 1, les mêmes éléments portant alors les mêmes références. Le module d'initialisation 19 dispose, dans une mémoire morte 39, de paramètres de calcul ΔT, T_{LM} et Tₘₐₓ. Une fois que la combustion a commencé dans les cylindres du moteur, un compteur d'état z est initialisé à zéro à l'étape 40, et le module d'initialisation 19 reçoit par les connexions 14 et 15 une valeur mesurée Tₐᵢᵣ(z) représentant la température d'air admis dans le moteur, et une valeur mesurée T_{liq}(z) représentant la température du liquide de refroidissement au voisinage du moteur. A l'étape 41, ces valeurs mesurées sont affectées à des valeurs initiales T_{air_ini} et T_{liq_ini}. Aux étapes 42 et 43, des tests sont effectués sur les valeurs T_{air_ini} et T_{liq_ini} pour déterminer aux étapes 44 et 45 laquelle des deux valeurs de T_{air_ini}, mesurée par le capteur 8, ou de Tₘₐₓ, enregistrée dans la mémoire 39, sera attribuée à la variable T_{filtre}(0) qui sera utilisée par la suite par le module 20 comme valeur initiale de température extérieure au véhicule. D'après les test 42 et 43, la valeur initiale T_{air_ini} de température d'air admis est choisie comme valeur initiale T_{filtre(0)} si les deux conditions suivantes sont réalisées simultanément :
- la différence de température entre la température initiale d'air admis Ta_{ir_ini} et la température initiale T_{liq_ini} de liquide de refroidissement est inférieure en valeur absolue à une valeur ΔT stockée dans la mémoire morte 39 ;
- la valeur T_{liq_ini} de liquide de refroidissement est inférieure à une valeur maximale stockée dans la mémoire morte 39.

Si l'une ou l'autre des ces conditions n'est pas réalisée, une valeur arbitraire Tₘₐₓ également stockée dans la mémoire morte 39, est affectée à la valeur initiale T_{filtre(0)} de température extérieure estimée.

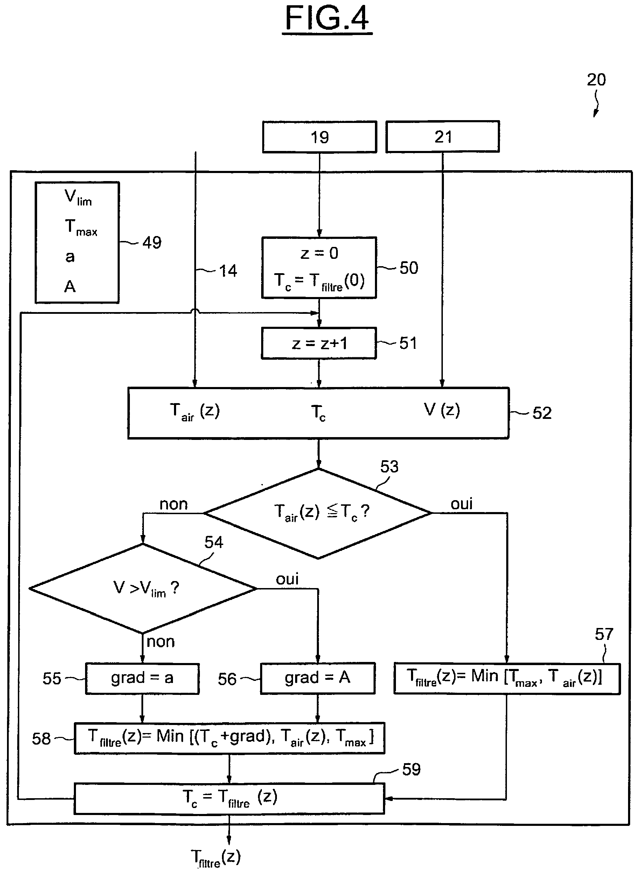

La figure 4 illustre de manière simplifiée un mode de fonctionnement possible du module 20 d'estimation courante de la température extérieure au véhicule. La figure 4 reprend des éléments communs à la figure 1, les mêmes éléments étant désignés par les mêmes références. Le module d'estimation 20 dispose, dans une mémoire morte 49, de paramètres de calcul Vₗᵢₘ, Tₘₐₓ, a et A. Quand le module d'initialisation 19 de la figure 1 a déterminé une valeur initiale T_{filtre}(0), il la transmet au module d'estimation 20 à l'étape 50. Cette valeur initiale T_{filtre}(0) est affectée à une variable intermédiaire de calcul T_{c}, en même temps qu'un indicateur d'état z est forcé à zéro.

A l'étape 51, l'indicateur d'état z est incrémenté d'une unité, et le module d'estimation 20 reçoit par la connexion 14 le reliant au capteur 8 de la figure 1, une valeur courante Tₐᵢᵣ(z) représentant la température d'air admis dans le moteur. Le module 20 reçoit également du module d'estimation de vitesse 21, une valeur V(z) donnant la vitesse instantanée du véhicule. Les valeurs Tₐᵢᵣ(z), T_{c} et V(z) acquises à l'étape 52 sont ensuite soumises à des tests aux étapes 53 et 54, à partir desquels, soit à une étape 57 on attribue directement à la valeur filtrée courante T_{filtre}(z) la valeur Tₐᵢᵣ(z) d'air admis dans le moteur, majorée au besoin par une valeur Tₘₐₓ de température maximale acceptable ; soit on décide d'effectuer, à une étape 58, un filtrage sur la pente de la température extérieure estimée, des valeurs de pente maximale a ou A étant préalablement sélectionnées à des étapes 55 et 56. L'étape 57 est déclenchée si au test 53, la température d'air mesurée à l'admission Tₐᵢᵣ(z) est inférieure ou égale à la température T_{c} estimée à l'étape précédente.

Dans le cas contraire, le test 54 est déclenché, pour sélectionner une première valeur «a » de gradient, si la vitesse instantanée V(z) du véhicule est inférieure ou égale à une vitesse Vₗᵢₘ, et pour sélectionner une valeur de gradient «A » dans le cas contraire. Les valeurs a, A, Vₗᵢₘ, sont des paramètres enregistrés dans la mémoire morte 49. A l'étape 58, le gradient a ou le gradient A est utilisé pour incrémenter la valeur T_{c} estimée pour l'indicateur d'état z précédent, pour obtenir une valeur T_{filtre}(z), correspondant à l'indicateur d'état z actuel.

La valeur filtrée, ou directement répliquée, de la température d'air mesurée à l'admission du moteur, est ensuite affectée à une valeur courante de température extérieure estimée T_{filtre}(z). Dans tous les cas de figure, la valeur estimée de température T_{filtre}(z) est majorée par la valeur Tₘₐₓ de température maximale acceptable, qui est une constante stockée dans la mémoire morte 49. La valeur estimée de température T_{filtre}(z) est ensuite affectée à la variable intermédiaire de calcul T_{c}. Le processus reprend alors à l'étape 51, en incrémentant l'indicateur d'état z. La valeur T_{filtre}(z) représentant la température extérieure estimée, peut ensuite être transmise à d'autres modules de calcul, estimant par exemple les températures d'organes dissipatifs. Par souci de sécurité, on pourra choisir de majorer systématiquement la valeur T_{filtre}(z) en lui ajoutant un incrément positif δ constant, représentant par exemple une incertitude de mesure liée au capteur 8. On évitera ainsi de sous-estimer la température des organes mécaniques dont on souhaite éviter la surchauffe. L'ajout de l'incrément δ pourra être effectué avant ou après avoir seuillé la valeur de température extérieure T_{filtre}(z) par la valeur de seuil maximale Tₘₐₓ. En résumé, on pourra dire que la valeur estimée de température est, d'une part majorée en valeur par la température mesurée d'air admis dans le moteur, cette majoration ayant lieu suite au test 53 à l'étape 57 ; et d'autre part, que la valeur estimée de température est majorée en termes de pente ou de dérivé, par au moins deux valeurs différentes de gradient positif a et A. Cette majoration de pente a lieu à l'étape 58, après avoir sélectionné la valeur adéquate de gradient aux étapes 55 ou 56. Dans l'exemple illustré à la figure 4, deux valeurs différentes de gradient positif a et A sont imposées suivant que la vitesse instantanée V du véhicule est supérieure ou inférieure à une vitesse seuil Vₗᵢₘ.

La valeur maximale de gradient autorisée « A » pour les vitesses plus élevées que Vₗᵢₘ, est elle-même plus élevée que la valeur de gradient « a » autorisée pour les vitesses inférieures, car plus le véhicule se déplace vite, plus on considère qu'il est possible qu'une variation positive de température reflète une variation effective de la température extérieure, et non un simple échauffement temporaire des éléments présents sous la capot moteur. On peut envisager des variantes de réalisation où l'on définirait plusieurs vitesses limites, correspondant chacune à une transition d'un gradient maximal à un autre gradient maximal. On peut également envisager des variantes où l'on impose un gradient minimal négatif à la température estimée T_{filtre}(z), de manière à ne pas répercuter sur cette température estimée certains bruits d'acquisition des valeurs délivrées par le capteur de température 8. A titre d'exemple, on pourra, pour les paramètres stockés dans la mémoire 39 de la figure 3, prendre les valeurs suivantes :
Concernant la différence de température maximale ΔT entre la température initiale de liquide du moteur et la température initiale d'air admis dans le moteur, on pourra prendre des valeurs comprises entre 5 et 20°, ou plus préférentiellement entre 10 et 15°.
Concernant la valeur T_{LM} de température maximale de liquide de refroidissement, au dessus de laquelle on considère que la température d'air admis dans le moteur ne peut plus être acceptée comme température d'air ambiante, on pourra prendre des valeurs comprises entre 20 et 50° suivant le climat du pays où circule le véhicule, par exemple 30° pour un pays d'Europe occidentale.
Concernant la valeur Tₘₐₓ de température maximale acceptable pour la température extérieure au véhicule estimée, on pourra prendre des valeurs comprises entre 40° et 60° pour un véhicule circulant dans un pays tempéré, par exemple une valeur de 50°.
Concernant la valeur δ d'incrément à ajouter systématiquement à la température extérieure estimée, on prendra une valeur qui dépendra de la précision du capteur de température 8. La valeur de δ pourra être par exemple de l'ordre de 10°C.
Concernant les paramètres stockés en mémoire 49 pour le module d'estimation courante 20 de la figure 4, on pourra prendre la même valeur de température maximale estimée Tₘₐₓ que pour le module d'initialisation 19 de la figure 3 ; On pourra également choisir les valeurs de vitesse seuil et de gradients maximaux suivantes : la vitesse seuil doit être une vitesse comprise entre 10 et 30 km/heure, par exemple 15 km/heure ; la première valeur de gradient positif maximale « a » appliquée quand la vitesse est inférieure à la vitesse Vₗᵢₘ peut être par exemple comprise entre 0,001 °C/seconde et 0,01°C/seconde, par exemple égale à 0,006°C/seconde ; le gradient A correspondant aux vitesses plus élevées pourra par exemple être compris entre 0,005°C/seconde et 0,05°C/seconde et être par exemple égal à 0,017°C/seconde.

Dans le cas, non mentionné sur la figure 4, où l'on choisit également un gradient minimal négatif imposé à la vitesse extérieure estimée, ce gradient minimal négatif pourra être choisi en valeur absolue égale à un multiple compris entre 10 et 100 du plus grand des gradients maximaux positifs, ici le gradient maximal A. Par exemple, dans le cas où le gradient maximal A est égal à 1°C/minute, le gradient minimal pourra être pris égal à -1°C/seconde.

L'invention ne se limite pas aux exemples de réalisation décrits, et peut être déclinée en de nombreuses variantes en ajoutant des filtrages supplémentaires aux filtrages déjà décrits. Dans le cas d'un véhicule autre qu'un véhicule à quatre roues motrices ou d'un véhicule équipé d'ABS ou d'ESP, la vitesse instantanée du véhicule peut être simplement déduite à partir de la vitesse de rotation d'un compte-tours unique placé au niveau d'une des roues ou au niveau d'un des essieux. Il est possible, à chaque fois qu'une mesure où qu'une évaluation est faite et transmise, de transmettre simultanément avec la valeur mesurée ou estimée, un indicateur de validité booléen permettant de traduire si la valeur estimée ou mesurée présente un niveau de crédibilité suffisant ou non. La valeur estimée ou mesurée est alors traitée à l'étape suivante, de manière différente suivant son niveau de crédibilité. Les différentes valeurs de seuil et valeurs de gradient, peuvent prendre des valeurs autres que celles proposées ou être adaptées pour un même véhicule en fonction de la saison.

Le système d'évaluation selon l'invention utilise un nombre minimal de données d'entrée, ces données d'entrées étant disponibles par défaut sur la plupart des véhicules existants. Le nombre réduit de capteurs mis en jeu, et la simplicité de l'algorithme, assurent une grande robustesse au système. Le choix d'une température initiale qui est volontairement surestimée dès que l'on préjuge que le compartiment moteur n'a pas eu le temps de refroidir jusqu'à la température ambiante, amène également à surestimer la température des organes mécaniques dissipatifs, du moins durant la phase suivant immédiatement le démarrage du moteur. Ce choix amène à imposer à ces organes mécaniques, des modes de fonctionnement à dissipation d'énergie limitée, de manière à éviter leur surchauffe. Le système d'estimation de la température extérieure au véhicule suivant l'invention est donc robuste, économique, et facteur de sécurité.

## Revendications

1. Procédé de détermination d'une valeur estimée (T_{filtre}(z) de température d'air extérieur à un véhicule (1) mû par un moteur (5) à combustion interne, dans lequel on attribue une valeur estimée initiale (T_{filtre}(0) à la température estimée, puis on mesure la température d'air admis (Tₐᵢᵣ(z)) dans le moteur (5) et on évalue la vitesse (V(z)) du véhicule, **caractérisé en ce que** l'on procède à un filtrage mathématique de la température mesurée (Tₐᵢᵣ(z)) d'air admis dans le moteur (5), **caracterisé en ce que** le filtrage impose à la température estimée (T_{filtre}(z)) un gradient maximal prenant au cours du temps au moins deux valeurs positives différentes (a, A), l'une ou l'autre de ces valeurs de gradient positif maximal étant sélectionnée en fonction de la vitesse instantanée (V(z)) du véhicule.

2. Procédé de détermination de température d'air extérieur suivant la revendication 1, dans lequel on mesure une température initiale (T_{air_ini}) d'air admis dans le moteur (5) et une température initiale (T_{liq_ini}) de liquide de refroidissement ayant séjourné dans le circuit de refroidissement (10) du moteur (5), et on déduit de ces deux valeurs une valeur estimée initiale de température (T_{filtre}(0)).

3. Procédé de détermination de température d'air extérieur suivant l'une des revendications précédentes, dans lequel on impose un premier seuil de température maximale (Tₘₐₓ) à la température d'air estimée (T_{filtre}(z)) et à sa valeur initiale (T_{filtre}(0)).

4. Procédé de détermination de température d'air extérieur suivant l'une des revendications 2 à 3, dans lequel on impose la valeur du premier seuil (Tₘₐₓ) de température maximale à la valeur estimée initiale de température (T_{filtre}(0)), en particulier si l'écart entre la température initiale d'air admis (T_{air_ini}) dans le moteur (5) et la température initiale de liquide de refroidissement (T_{liq_ini}), est supérieur à un deuxième seuil d'écart (ΔT).

5. Procédé de détermination de température d'air extérieur suivant la revendication 4, dans lequel on impose la valeur du premier seuil de température maximale (Tₘₐₓ) à la valeur estimée initiale (T_{filtre}(0)), si la température initiale d'air entrant (T_{air_ini}) est supérieure à un troisième seuil (T_{LM}), ou si la température initiale de liquide de refroidissement, est supérieure à un quatrième seuil (T_{LM}).

6. Procédé de détermination de température d'air extérieur suivant les revendications 4 ou 5, dans lequel on prend comme valeur estimée initiale (T_{filtre}(0)), la température initiale d'air admis (T_{air_ini}) dans le moteur (5), ou la température initiale (T_{liq_ini}) de liquide de refroidissement, quand l'écart entre ces deux températures est inférieur au deuxième seuil d'écart (ΔT).

7. Procédé de détermination de température d'air extérieur suivant l'une des revendications précédentes, dans lequel la température estimée (T_{filtre}(z)), est égale à la température d'air admis (Tₐᵢᵣ(z)) dans le moteur (5) sur les périodes de temps où la température d'air admis dans le moteur (5) est décroissante,

8. Procédé de détermination de température d'air extérieur suivant les revendications 1 à 6, dans lequel on impose au moins deux gradients positifs maximaux différents (a, A) à la température estimée (T_{filtre}(z)) quand celle-ci croît, et au moins un gradient négatif minimal quand la température estimée décroît, le gradient négatif étant en valeur absolue supérieur à au moins dix fois chacun des deux gradients positifs.

9. Procédé de détermination de température d'air extérieur suivant l'une des revendications précédentes, dans lequel le filtrage impose un premier gradient positif maximal (a) compris entre 0.001°C/s et 0.01°C/s, et un second gradient positif maximal (A) qui est un multiple du premier gradient positif par un nombre compris entre 2 à 5.

10. Procédé d'estimation d'au moins une température interne à un coupleur (4) de transfert de couple entre deux trains (2, 3) de roues d'un véhicule (1), utilisant un procédé d'estimation de la température d'air extérieur au véhicule suivant l'une des revendications 1 à 9.

11. Système de détermination d'une valeur estimée de température d'air extérieur à un véhicule (1) mû par un moteur (5) à combustion interne, comprenant un capteur (8) de température d'air admis dans le moteur, un capteur (11) de température de liquide de refroidissement du moteur (5), un dispositif (21) d'évaluation de la vitesse instantanée (V(z)) du véhicule, un module d'initialisation (19) apte à déterminer une température initiale (T_{filtre}(0)) à partir d'une température initiale d'air admis (T_{air_ini}) dans le moteur (5) et d'une température initiale de liquide de refroidissement (T_{liq_ini}), **caractérisé par** un module d'estimation (20) apte à filtrer mathématiquement" la température d'air admis (Tₐᵢᵣ(z)) dans le moteur (5) de manière à imposer à la valeur filtrée (T_{filtr}(z)) un gradient maximal prenant au cours du temps au moins deux valeurs positives différentes (a, A), l'une ou l'autre de ces valeurs de gradient positif maximal étant sélectionnée en fonction de la vitesse instantanée (V(z)) du véhicule (1).

## Patentansprüche

1. Verfahren zur Bestimmung eines Schätzwerts (T_{filtre}(z)) einer Lufttemperatur außerhalb eines von einem Verbrennungsmotor (5) bewegten Fahrzeugs (1), wobei der Schätztemperatur ein Ausgangsschätzwert (T_{filtre}(0)) zugewiesen wird, dann die Temperatur der in den Motor (5) angesaugten Luft (Tₐᵢᵣ(z) gemessen und die Geschwindigkeit (V(z)) des Fahrzeugs ermittelt wird, **dadurch gekennzeichnet, dass** eine mathematische Filterung der gemessenen Temperatur (Tₐᵢᵣ(z)) der in den Motor (5) angesaugten Luft durchgeführt wird, **dadurch gekennzeichnet, dass** die Filterung der Schätztemperatur (T_{filtre}(z)) einen maximalen Gradienten vorgibt, der im Lauf der Zeit mindestens zwei verschiedene positive Werte (a, A) annimmt, wobei der eine oder der andere dieser Werte eines maximalen positiven Gradienten abhängig von der Augenblicksgeschwindigkeit (V(z)) des Fahrzeugs ausgewählt wird.

2. Verfahren zur Bestimmung einer Außenlufttemperatur nach Anspruch 1, wobei eine Ausgangstemperatur (T_{air_ini}) einer in den Motor (5) angesaugten Luft und eine Ausgangstemperatur (T_{liq_ini}) einer Kühlflüssigkeit gemessen werden, die sich im Kühlkreislauf (10) des Motors (5) aufgehalten hat, und von diesen zwei Werten ein Temperatur-Ausgangsschätzwert (T_{filtre}(0)) abgeleitet wird.

3. Verfahren zur Bestimmung einer Außenlufttemperatur nach einem der vorhergehenden Ansprüche, wobei der geschätzten Lufttemperatur (T_{filtre}(z)) und ihrem Ausgangswert (T_{filtre}(0)) eine erste maximale Temperaturschwelle (Tₘₐₓ) vorgegeben wird.

4. Verfahren zur Bestimmung einer Außenlufttemperatur nach einem der Ansprüche 2 bis 3, wobei der Wert der ersten maximalen Temperaturschwelle (Tₘₐₓ) dem Temperatur-Ausgangsschätzwert (T_{filtre}(0)) vorgegeben wird, insbesondere, wenn die Abweichung zwischen der Ausgangstemperatur (T_{air_ini}) der in den Motor (5) angesaugten Luft und der Ausgangstemperatur (T_{liq_ini}) der Kühlflüssigkeit höher als eine zweite Abweichungsschwelle (ΔT) ist.

5. Verfahren zur Bestimmung einer Außenlufttemperatur nach Anspruch 4, wobei der Wert der ersten maximalen Temperaturschwelle (Tₘₐₓ) dem Ausgangsschätzwert (T_{filtre}(0)) vorgegeben wird, wenn die Ausgangstemperatur der angesaugten Luft (T_{air_ini}) höher als eine dritte Schwelle (T_{LM}) ist, oder wenn die Ausgangstemperatur der Kühlflüssigkeit höher als eine vierte Schwelle (T_{LM}) ist.

6. Verfahren zur Bestimmung einer Außenlufttemperatur nach den Ansprüchen 4 oder 5, wobei als Ausgangsschätzwert (T_{filtre}(0)) die Ausgangstemperatur (T_{air_ini}) der in den Motor (5) angesaugten Luft oder die Ausgangstemperatur (T_{liq_ini}) der Kühlflüssigkeit genommen wird, wenn die Abweichung zwischen diesen zwei Temperaturen niedriger als die zweite Abweichungsschwelle (ΔT) ist.

7. Verfahren zur Bestimmung einer Außenlufttemperatur nach einem der vorhergehenden Ansprüche, wobei die Schätztemperatur (T_{filtre}(z)) gleich der Temperatur (Tₐᵢᵣ(z)) der in den Motor (5) angesaugten Luft über die Zeitspannen ist, in denen die Temperatur der in den Motor (5) angesaugten Luft sinkt.

8. Verfahren zur Bestimmung einer Außenlufttemperatur nach den Ansprüchen 1 bis 6, wobei mindestens zwei verschiedene maximale positive Gradienten (a, A) der Schätztemperatur (T_{filtre}(Z)), wenn diese steigt, und mindestens ein minimaler negativer Gradient, wenn die Schätztemperatur sinkt, vorgegeben werden, wobei der negative Gradient im Absolutwert höher als mindestens das Zehnfache jeder der zwei positiven Gradienten ist.

9. Verfahren zur Bestimmung einer Außenlufttemperatur nach einem der vorhergehenden Ansprüche, wobei die Filterung einen ersten maximalen positiven Gradienten (a) zwischen 0,001°C/s und 0,01°C/s, und einen zweiten maximalen positiven Gradienten (A) vorgibt, der ein Vielfaches des ersten positiven Gradienten um eine Zahl zwischen 2 und 5 ist.

10. Verfahren zur Schätzung mindestens einer Innentemperatur eines Drehmoment-Übertragungskopplers (4) zwischen zwei Radsätzen (2, 3) eines Fahrzeugs (1), das ein Verfahren zur Schätzung der Lufttemperatur außerhalb des Fahrzeugs nach einem der Ansprüche 1 bis 9 verwendet.

11. System zur Bestimmung eines Schätzwerts einer Lufttemperatur außerhalb eines von einem Verbrennungsmotor (5) bewegten Fahrzeugs (1), das einen Sensor (8) für die Temperatur der in den Motor angesaugten Luft, einen Sensor (11) für die Temperatur der Kühlflüssigkeit des Motors (5), eine Vorrichtung (21) zur Ermittlung der Augenblicksgeschwindigkeit (V(z)) des Fahrzeugs, ein Initialisierungsmodul (19), das eine Ausgangstemperatur (T_{filtre}(0)) ausgehend von einer Ausgangstemperatur (T_{air_ini}) einer in den Motor (5) angesaugten Luft und einer Ausgangstemperatur einer Kühlflüssigkeit (T_{liq_ini}) bestimmen kann, **gekennzeichnet durch** ein Schätzmodul (20), das die Temperatur (Tₐᵢᵣ(z)) der in den Motor (5) angesaugten Luft mathematisch filtern kann, um dem gefilterten Wert (T_{filtre}(z)) einen maximalen Gradienten vorzugeben, der im Lauf der Zeit mindestens zwei verschiedene positive Werte (a, A) annimmt, wobei der eine oder der andere dieser Werte eines maximalen positiven Gradienten abhängig von der Augenblicksgeschwindigkeit (V(z)) des Fahrzeugs (1) ausgewählt wird.

## Claims

1. Method for determining an estimated value (T_{filtre}(z) of air temperature outside a vehicle (1) propelled by an internal combustion engine (5), in which an initial estimated value (T_{filtre}(0)) is assigned to the estimated temperature, then the temperature of the air admitted (Tₐᵢᵣ(z)) into the engine (5) is measured and the speed (V(z)) of the vehicle is evaluated, **characterized in that** a mathematical filtering is carried out of the measured temperature (Tₐᵢᵣ(z)) of air admitted into the engine (5), **characterized in that** the filtering imposes on the estimated temperature (T_{filtre}(z)) a maximum gradient taking at least two different positive values (a, A) over time, one or other of these maximum positive values of gradient being selected as a function of the instantaneous speed (V(z)) of the vehicle.

2. The method for determining the outside air temperature according to claim 1, in which an initial temperature (T_{air_ini}) of air admitted into the engine (5) and an initial temperature (T_{liq_ini}) of coolant liquid having spent time in the cooling circuit (10) of the engine (5) are measured, and an initial estimated value of temperature (T_{filtre}(0)) is deduced from these two values.

3. The method for determining the outside air temperature according to one of the preceding claims, in which a first maximum temperature threshold (Tₘₐₓ) is imposed on the estimated air temperature (T_{filtre}(z)) and on its initial value (T_{filtre} (0)).

4. The method for determining the outside air temperature according to either of claims 2 and 3, in which the value of the first maximum temperature threshold (Tₘₐₓ) is imposed on the initial estimated value of temperature (T_{filtre}(0)), in particular if the difference between the initial temperature (T_{air_ini}) of air admitted into the engine (5) and the initial temperature of the coolant liquid (T_{liq_ini}), is higher than a second difference threshold (ΔT).

5. The method for determining the outside air temperature according to claim 4, in which the value of the first maximum temperature threshold (Tₘₐₓ) is imposed on the initial estimated value (T_{filtre}(0)), if the initial temperature of incoming air (T_{air_ini}) is higher than a third threshold (T_{LM}), or if the initial temperature of the coolant liquid is higher than a fourth threshold (T_{LM}).

6. The method for determining the outside air temperature according to either of claims 4 and 5, in which the initial temperature of the air admitted (T_{air_ini}) into the engine (5) is take as initial estimated value (T_{filtre} (0)), or the initial temperature (T_{liq_ini}) of coolant liquid, when the difference between these two temperatures is less than the second difference threshold (ΔT).

7. The method for determining the outside air temperature according to one of the preceding claims, in which the estimated temperature (T_{filtre}(z)) is equal to the temperature of the air admitted (Tₐᵢᵣ (z)) into the engine (5) over the periods of time where the temperature of the air admitted into the engine (5) is decreasing.

8. The method for determining the outside air temperature according to claims 1 to 6, in which at least two different maximum positive gradients (a, A) are imposed on the estimated temperature (T_{filtre}(z)) when the latter is increasing, and at least one minimum negative gradient when the estimated temperature is decreasing, the negative gradient being in absolute value greater than at least ten times each of the two positive gradients.

9. The method for determining the outside air temperature according to one of the preceding claims, in which the filtering imposes a first maximum positive gradient (a) in the range between 0.001°C/s and 0.01°C/s, and a second maximum positive gradient (A) which is a multiple of the first positive gradient by a number in the range between 2 and 5.

10. A method for estimating at least one temperature internal to a coupler (4) for transferring a torque between two sets (2, 3) of wheels of a vehicle (1), using a method for estimating the air temperature outside the vehicle according to one of claims 1 to 9.

11. A system for determining an estimated value of air temperature outside a vehicle (1) propelled by an internal combustion engine (5), comprising a sensor (8) of temperature of the air admitted into the engine, a sensor (11) for temperature of the coolant liquid of the engine (5), a device (21) for evaluation of the instantaneous speed (V(z)) of the vehicle, a reset module (19) capable of determining an initial temperature (T_{filtre}(0)) based on an initial temperature of the air admitted (T_{air_ini}) into the engine (5) and on an initial temperature of the coolant liquid (T_{liq_ini}), **characterized by** an estimation module (20) designed to mathematically filter the temperature of the air admitted (Tₐᵢᵣ (z)) into the engine (5) in such a manner as to impose on the filtered value (T_{filtre}(z)) a maximum gradient taking at least two different positive values (a, A) over time, one or the other of these values of maximum positive gradient being selected as a function of the instantaneous speed (V(z)) of the vehicle (1).
